# EUROPÄISCHE PATENTANMELDUNG

(11) **EP 2 801 431 A1**
(43) Veröffentlichungstag der Anmeldung: **12.11.2014**
(21) Anmeldenummer: 14165068.9
(22) Anmeldetag: 17.04.2014
(51) Int. Cl.: B23D 63/12, B23D 61/02, B23D 65/00, B23D 63/14

(54) **Bearbeitungsverfahren eines Sägeblattes und Sägeblattschleifmaschine**

(30) Priorität: 06.05.2013 CH 9162013
(71) Anmelder: Iseli & Co. AG Maschinenfabrik, 6247 Schötz (CH)
(72) Erfinder: Iseli, Benno, 6247 Schötz (CH)
(74) Vertreter: Schneider Feldmann AG Patent- und Markenanwälte

(57) **Zusammenfassung**

Zur Vermeidung beziehungsweise Reduktion von Rissbildungen in Sägeblättern wird ein Bearbeitungsverfahren vorgeschlagen, bei dem in einer einzigen Aufspannung des Sägeblattes (1) sowohl der Zahngrund (6) als auch die Hartmetalleinsätze (3) geschliffen werden. Während die Hartmetalleinsätze (3) mit einer ersten Schleifscheibe (12) bearbeitet wird, wird danach der Zahngrund (6) mit einer zweiten Schleifscheibe (14) bearbeitet. Hierbei werden die beiden gegenüberliegenden Kanten (11) des Zahngrundes nacheinander angefast und dann das Sägeblatt um eine Zahnteilung verschoben.

## Beschreibung

Die vorliegende Erfindung betrifft ein Verfahren zur Bearbeitung eines Sägeblattes mittels einer Sägeblattschleifmaschine, wobei das Sägeblatt mit Hartmetalleinsätzen bestückt ist, und eine Sägeblattschleifmaschine zur Durchführung des Verfahrens.

Sägeblattschleifmaschinen sind in grosser Vielfalt und unterschiedlichster Konstruktion auf dem Markt erhältlich. Diese Vielfalt beruht nicht zuletzt darauf, dass zur Erhöhung der Produktivität praktisch für jede Bearbeitungsform wieder eine andere Maschine benötigt wird. So sind Maschinen die zur Produktion von Sägeblätter dienen, die je nach Form des Sägeblattes, unterschiedlich gestaltet sind. Ferner sind Sägeblattschleifmaschinen auf dem Markt die speziell für Bandsägeblätter konzipiert sind (siehe z.B. EP 1149652 oder US 8151669) und andere, die für Kreissägeblätter konstruiert worden sind, wie z. B. DE 10224499. Auch sind Sägeblattschleifmaschinen auf dem Markt die zum Nachschleifen von Sägeblättern dienen, wobei auch hier wiederum diese Maschinen unterschiedlich sind, je nachdem, ob diese Sägeblätter mit Hartmetalleinsätzen versehen sind oder nicht. Aus der DE-20108796 ist eine Sägeblattschleifmaschine bekannt, bei der auf derselbe Maschine sowohl die Zahnkontur mit einer ersten Schleifscheibe als auch die Hartmetalleinsätze mit einer zweiten Schleifscheibe bearbeitbar ist.

Da die Belastungen, denen solche Sägeblätter ausgeliefert sind, enorm hoch sind, ist deren Präzision von grosser Bedeutung. Diese Präzision betrifft sowohl das Sägeblatt als auch die speziellen Sägeblattzähne, bzw. die Hartmetalleinsätze, mit denen diese Sägezähne bestückt sind. Besonders wesentlich ist diese Präzision, um ein möglichst dauerhaftes Sägeblatt zu erreichen. Trotz dieser hochpräzisen Bearbeitung treten selbstverständlich immer noch Schäden auf. Neben einer einfachen Abnutzung, die durch mehrmaliges Nachschleifen behoben werden kann, können Unebenheiten im Sägeblatt auftreten, die mit speziellen Richtmaschinen behoben werden können. Insbesondere treten aber immer auch Sägeblattrisse auf, deren Entstehung keineswegs immer erklärbar ist.

In neuerer Zeit sind auch gefräste Sägeblätter, insbesondere Kreissägeblätter auf dem Markt. Aber auch bei diesen Sägeblätter treten Sägeblattrisse auf, und auch hier ist deren Entstehung keineswegs eindeutig geklärt.

Die Anmelderin hat nunmehr Überlegungen angestellt und Versuche durchgeführt, um durch entsprechende Bearbeitung die Rissbildung an Sägeblättern zu reduzieren.

Es ist nunmehr Aufgabe der vorliegenden Erfindung, ein Bearbeitungsverfahren der eingangs genannten Art zu schaffen, welches die Sägeblattrissbildung reduziert.

Diese Aufgabe löst ein Bearbeitungsverfahren zur umspannungsfreien Bearbeitung eines Sägeblattes mit den Merkmalen des Patentanspruches 1 und eine Sägeblattschleifmaschine mit den Merkmalen des Anspruchs 10 zur Durchführung eines solchen Verfahrens.

Die bisher hochpräzise geschliffenen Sägeblätter weisen zwischen den Zahnflanken und den gezahnten Peripherieflächen einen hochgenauen Winkel von 90° auf. Hierbei geht man davon aus, dass die Hartmetalleinsätze, welche die Zähne bilden, eine Schneide haben, die minim breiter als die Dicke des Sägeblattes ist. Diese maximale Breite trifft lediglich an der Schneide auf, die an der Oberkante der Zahnbrust verläuft. Somit geht man davon aus, dass das eigentliche Sägeblatt annähernd berührungsfrei in dem durch die Sägewirkung entstandenen Spalt läuft.

Es hat sich nun aber gezeigt, dass dies auch bei hochpräziser Bearbeitung keineswegs der Fall ist. Die eigentliche Zahnform wird auf speziellen Maschinen geschliffen, und dabei entstehen an den Rändern immer auch minime Brauen. Durch diese Brauen, die im Schnittspalt des geschnittenen Holzes einhängen, tritt ein seitlich wirkendes Moment auf, welches das Sägeblatt in eine gewisse Schwingung versetzt, die sich dann während des Schneidens verstärken kann und so zu Sägeblattrisse führen kann. Durch die erfindungsgemässe Anfasung des Zahngrundes im Bereich zwischen zwei aufeinander folgenden Hartmetalleinsätzen erhofft man wesentlich bessere Resultate zu erhalten.

Insbesondere auch bei gefrästen Sägeblättern ist die Oberflächenstruktur des Zahnrundes wesentlich gröber als bei einer geschliffenen Fläche. Auch hier hat es sich gezeigt, dass wesentlich weniger Sägeblattrisse auftreten, wenn auch hier die Kanten des Zahngrundes angefast werden.
Besonders gering scheint die Kerbwirkung dann zu sein, wenn man die Anfasung in den, den Hartmetalleinsätzen nächstliegenden Bereichen am geringsten ausprägt und von dort sukzessive zum tiefsten Punkt des Zahngrundes zunehmend schleift und danach von dort zum folgenden Hartmetalleinsatz diese Anfasung abnehmend in der Stärke der Anfasung schleift.

Besonders vorteilhaft hat sich erwiesen, wenn man die Anfasung in den, den Hartmetalleinsätzen nachfolgenden Bereichen am geringsten ausprägt und von dort sukzessive zum tiefsten Punkt des Zahngrundes zunehmend schleift und danach von dort zum nachfolgenden Hartmetalleinsatz diese Anfasung in der Anfastiefe verringert schleift. Diese Formgebung der Anfasung verbessert die Abführung der Späne aus dem Bereich des Zahngrundes. Bauen sich im Bereich des Zahngrundes Sägespäne auf, so wird dabei auf denselben ein Druck ausgeübt und durch das im Holz vorhandene Harz entstehen Verklebungen und tritt ein Kippmoment auf diese aufgebauten Sägespäne, so führt dies zu einer sehr schnellen, kurzzeitigen Verformung des Sägeblattes und bewirkt so, falls im Zahngrund bereits Schleifspuren vorhanden sind, eine Kerbwirkung, die zu Rissbildungen führen kann. Dank der bevorzugten Ausgestaltung der Anfasung kann dies vermieden werden.

In der Zeichnung ist ein Teilbereich einer Sägeblattschleifmaschine mit seinem Bearbeitungskopf und der Sägeblatthalterung und -führung gezeigt, unter Weglassung der sonstigen Maschinenteile. Es zeigt:
- Fig. 1: einen Teilausschnitt eines Kreissägeblattes, dass mit Hartmetalleinsätzen bestückt ist, mit einer ersten Anfasungsform und
- Fig. 2: einen gleichen Kreissägeblattausschnitt mit einer anders gestalteten Ausführungsform der Anfasung.
- Fig. 3: zeigt einen diametralen Teilschnitt durch ein Sägeblatt im Bereich des Zahngrundes vor der Bearbeitung und
- Fig. 4: dieselbe Ansicht, jedoch mit einer bereits durchgeführten Anfasung im Bereich des Zahngrundes.
- Fig. 5: zeigt rein symbolisch einen Teil eines Kreissägeblattes während der Bearbeitung.
- Fig. 6: zeigt vereinfacht eine Ansicht auf einer Sägeblattschleifmaschine, die zur Durchführung des erfindungsgemässen Verfahrens geeignet ist und
- Fig. 7: dieselbe Maschine in einer Ansicht um 90° gedreht.

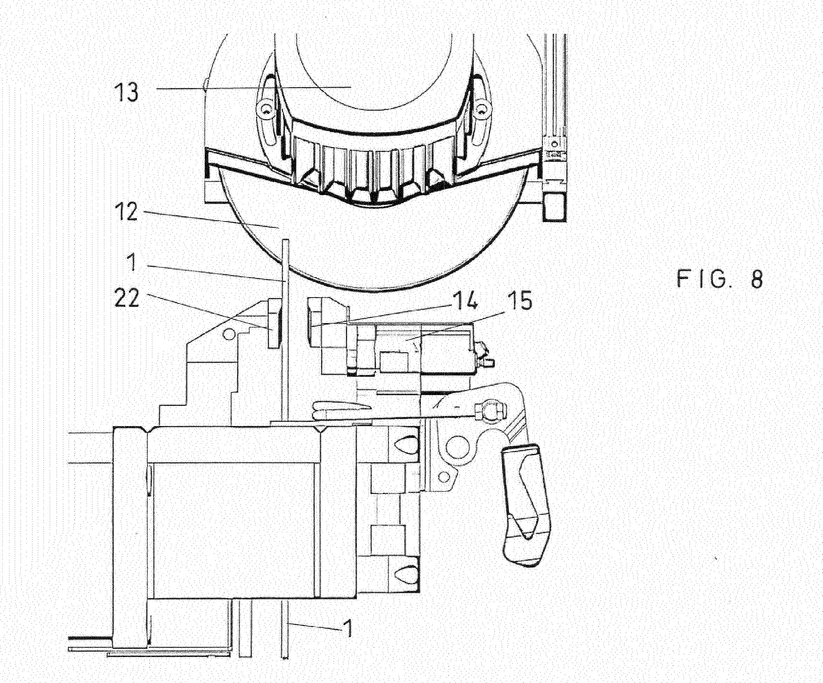

- Fig. 8: zeigt eine Teilansicht dieser Maschine in grösserem Massstab.

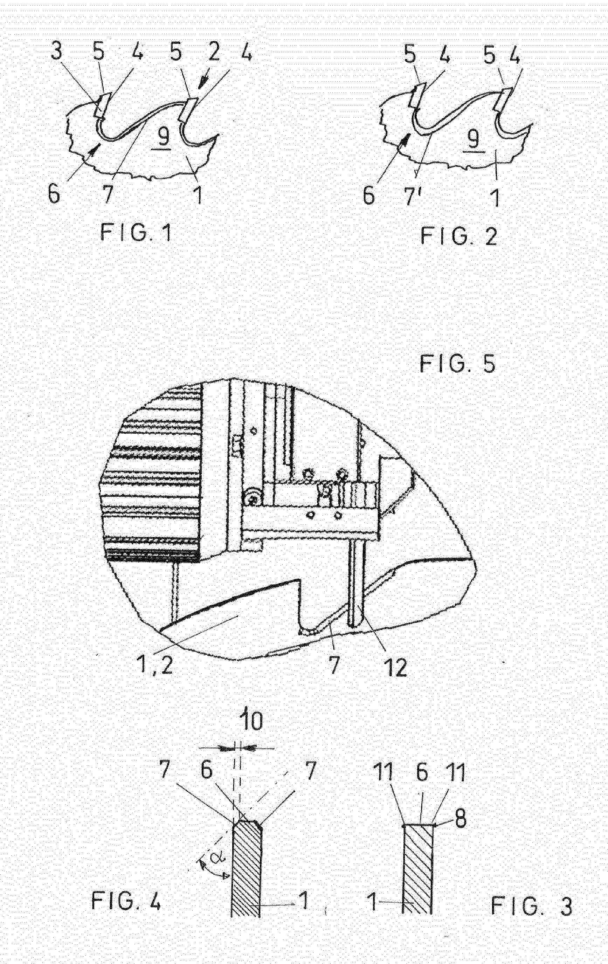

In den Figuren 1 und 2 sind Teilbereiche eines Kreissägeblattes detailliert dargestellt. Das Sägeblatt selbst ist mit 1 bezeichnet. Der eigentliche Sägezahn 2 entspricht dem Bereich der Spitze und ist mit einem Hartmetalleinsatz 3 versehen. Diese Hartmetalleinsätze besitzen eine sogenannte Zahnbrust 4, die in Drehrichtung vorne liegt. Die obere Seite dieses Hartmetalleinsatzes 3 wird Zahnrücken 5 genannt und die eigentliche Schneidkante ist jene Kante die dem Zahnrücken 5 und der Zahnbrust 4 gemeinsam ist. Zwischen den benachbarten Hartmetalleinsätzen 3 befindet sich der Zahngrund 6. Dieser Zahngrund 6 weist eine Anfasung 7 oder 7' auf. In der Variante gemäss der Figur 1, ist diese Anfasung über die gesamte Länge gleichbleibend, das heisst die Anfastiefe 10 ist über die gesamte Länge gleichbleibend. Unter der Anfastiefe wird hier die Distanz von der Zahnflanke 9, welche hier als die seitliche Fläche des Sägeblattes 1 verstanden wird, und jener Linie, in der die Anfasung in den Zahngrund 6 ausläuft, bezeichnet. Hierzu wird auf die Figur 4 verwiesen.

In der Figur 2 verläuft nun diese Anfasung anders und entsprechend ist hier diese Anfasungsform mit 7' bezeichnet. Diese Anfasung beginnt direkt anschliessend am untersten Auflageende des Hartmetalleinsatzes 3 und nimmt dann zum tiefsten Punkt des Zahngrundes 6 hin sukzessive zu. Von diesem Punkt verläuft nun die Anfasung weiter bis zu jenem Punkt, der dem Zahnrücken 5am nächsten liegt. Vom tiefsten Punkt des Zahngrundes zum nächstliegenden Punkt beim Zahnrücken 5 nimmt diese Anfasung nun in seiner Anfastiefe 10 wieder sukzessive ab.

Werden Sägeblätter geschliffen, so bildet sich an der Kante zwischen der Zahnflanke 9 und der Grundfläche des Zahngrundes 6 meist eine Braue 8 (siehe Fig. 3). Die Anfasung kann in solchen Fällen so minim sein, dass praktisch nur diese Braue 8 weggeschliffen wird, und die Anfastiefe kaum mehr als ein oder mehrere Zehntel Millimeter beträgt. In der Figur 3 ist auch die Kante 11 des Zahngrundes 6 mit der Zahnflanke 9 gekennzeichnet. Diese Kante 11 zu brechen, beziehungsweise anzufasen, ist der Sinn der vorliegenden Erfindung. Dies kann sowohl direkt bei der Herstellung eines Sägeblattes erfolgen oder auch zu einem beliebigen späteren Zeitpunkt, wenn Sägeblätter zum Schärfen nachbearbeitet werden. Aus diesem Grunde wird auch hier bevorzugterweise eine Sägeblattschleifmaschine eingesetzt, die, wie eingangs erwähnt, mit zwei Schleifscheiben und mit den entsprechend getriebenen Spindeln versehen ist. In der Figur 5 ist lediglich die erste betriebene Schleifscheibe erkennbar, während deren Antriebswelle oder -spindel hier nicht ersichtlich ist.

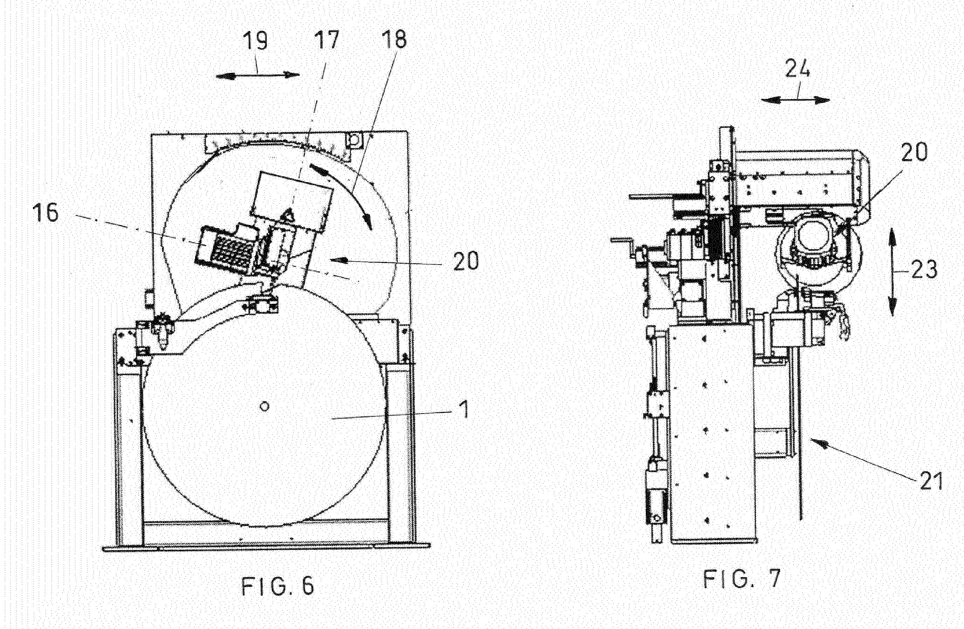

Die Figuren 6 und 7 zeigen eine zur Durchführung des Verfahrens geeignete Sägeblattschleifmaschine in vereinfachter Darstellung. So fehlen hier in der Zeichnung sämtliche für die Durchführung der Bewegung erforderlichen Antriebseinheiten, die Steuervorrichtung, die Kühlmittelzuführung und so weiter. Diese Maschinen sind insbesondere auch mit einer programmierbaren Steuerung versehen, so dass hiermit alle bekannten Zahnformen und alle gewünschten Arten der Anfasung erzielbar sind.

Die Verlaufsrichtungen der beiden Spindeln der Schleifscheibenantriebe, nämlich jene Achse der Spindel der ersten Schleifscheibe ist hier mit 16 und die Achse der Spindel der zweiten Schleifscheibe mit 17 bezeichnet. Beide Schleifscheiben und deren Antriebe sind an einem sogenannten Schleifkopf 20 befestigt und dieser Schleifkopf 20 kann verschiedene Bewegungen durchführen. Eine erste durchführbare Bewegung ist die Horizontalbewegung 19, die parallel zur Ebene verläuft, in der das Sägeblatt 1 liegt. Dieses Sägeblatt 1 ist in einer Sägeblatthalterung 21 gehalten.

Der Schleifkopf lässt sich aber auch in vertikaler Richtung bewegen, wie dies durch den Doppelpfeil 23 angegeben ist. Auch senkrecht zur Horizontalbewegung 19 ist der Schleifkopf 20 beweglich, wie dies durch den Doppelpfeil 24 dargestellt ist, der die Vor- und Rückbewegungsrichtungen angibt. Letztlich ist aber der Schleifkopf 20 auch noch in einem gewissen Bereich drehbar, um den Neigungswinkel der ersten Schleifscheibe 12 zu verstellen.

Während die erste Schleifscheibe 12 eine herkömmliche Schleifmaschine für die Bearbeitung von sogenanntem HSS-Stahl ist, ist die zweite Schleifscheibe 14 im Durchmesser wesentlich kleiner und wird auch hochtouriger betrieben um die genügende Umfangsgeschwindigkeit zu erzielen und mit dieser zweiten Schleifscheibe 14 erfolgt die Bearbeitung der Hartmetalleinsätze 3.

Mit anderen Worten, die vorliegende Maschine kann neben dem erfindungsgemässen Verfahren auch die sonst üblichen Schleifarbeiten an Sägeblättern durchführen. Damit ist diese Maschine universell einsetzbar. So kann man das Verfahren, wie bereits erwähnt, sowohl an Kreissägeblätter als auch an Bandsägeblätter durchführen. Hier gezeigt ist jedoch lediglich eine Sägeblattschleifmaschine, die für Kreissägeblätter ausgelegt ist. Wie aber erwähnt, kann eine entsprechende Sägeblattschleifmaschine auch für Bandsägeblätter gestaltet sein.

Obwohl das zu bearbeitende Sägeblatt 1 während der Durchführung des Verfahrens fixiert und geklemmt ist, kann es zusätzlich sinnvoll sein, an jener Seite, die der Bearbeitungsseite gegenüberliegt eine einseitige Abstützung 22 vorzusehen. Neben der Möglichkeit, nur von einer Seite her die Hartmetalleinsätze zu schliefen, kann auch eine Lösung vorgesehen sein, bei der einander diametral gegenüber zwei solche Schleifscheiben vorgesehen sind. Diese können gleichzeitig oder nacheinander in Betrieb genommen werden.

### Bezugszeichenliste:

- 1: Sägeblatt
- 2: Sägezahn
- 3: Hartmetalleinsatz
- 4: Zahnbrust
- 5: Zahnrücken
- 6: Zahngrund
- 7, 7': Anfasung
- 8: Braue
- 9: Zahnflanke
- 10: Anfastiefe
- 11: Kante des Zahngrundes
- 12: erste Schleifscheibe
- 13: Antriebsmotor der ersten Schleifscheibe
- 14: zweite Schleifscheibe
- 15: Antriebsmotor für zweite Schleifscheibe
- 16: Achse der Spindel der ersten Schleifscheibe
- 17: Achse der Spindel der zweiten Schleifscheibe
- 18: Neigungswinkeleinstellung des Schleifkopfes
- 19: Horizontalbewegung
- 20: Schleifkopf
- 21: Sägeblatthalterung
- 22: einseitige Abstützung
- 23: Vertikalbewegung des Schleifkopfes
- 24: Vor-, Rückbewegungsrichtung des Schleifkopfes

## Patentansprüche

1. Bearbeitungsverfahren zur Bearbeitung eines Sägeblattes (1) mittels einer Sägeblattschleifmaschine, wobei das Sägeblatt (1) mit Hartmetalleinsätzen (3) bestückt ist, **dadurch gekennzeichnet, dass** mit einer einzigen Aufspannung des Sägeblattes (1) auf der Sägebandschleifmaschine sowohl die Hartmetalleinsätze (3) mit einer ersten Schleifscheibe (12) mit einer ersten getriebenen Spindel bearbeitbar sind, und mittels einer zweiten Schleifscheibe (14), die von einer zweiten Spindel getrieben ist, jeweils den Zahngrund (6) im Bereich zwischen zwei aufeinanderfolgenden Hartmetalleinsätzen (3) eine Anfasung (7,7') des Zahngrundes (6) erfolgt, wobei abwechselnd jeweils erst eine Kante des Zahngrundes (11) und danach die gegenüberliegende Kante des Zahngrundes (11) angefast wird, worauf das Sägeblatt (1) um eine Zahnteilung verschoben wird.

2. Bearbeitungsverfahren nach Anspruch 1, **dadurch gekennzeichnet, dass** zuerst der Zahngrund (6) angefast wird und danach der Hartmetalleinsatz (3) geschliffen wird.

3. Bearbeitungsverfahren nach Anspruch 1 oder 2, **dadurch gekennzeichnet, dass** die Tiefe der Anfasung (7, 7') in den Hartmetalleinsätzen (3) nächstliegenden Bereichen am geringsten ist um sukzessive von dort zum tiefsten Punkt des Zahngrundes (6) hinzunehmend geschliffen wird und danach von dort zum folgenden Hartmetalleinsatz (3) abnehmend geschliffen wird.

4. Bearbeitungsverfahren nach Anspruch 1 oder 2, **dadurch gekennzeichnet, dass** die Anfastiefe (10) weniger als 1mm, bevorzugterweise weniger als 0,5mm, beträgt.

5. Bearbeitungsverfahren nach Anspruch 1 oder 2, **dadurch gekennzeichnet, dass** die Anfasung (7, 7') von einer ersten Zahnbrust (4) eines Hartmetalleinsatzes (3) zum Zahnrücken (5) des folgenden Hartmetalleinsatzes (3) hin erfolgt.

6. Bearbeitungsverfahren nach einem der Ansprüche 1 bis 5, **dadurch gekennzeichnet, dass** dieses an einem Kreissägeblatt erfolgt.

7. Bearbeitungsverfahren nach einem der Ansprüche 1 bis 5, **dadurch gekennzeichnet, dass** dieses an einem Bandsägeblatt erfolgt.

8. Bearbeitungsverfahren nach Anspruch 1, **dadurch gekennzeichnet, dass** das Sägeblatt (1) während der Anfasung (7, 7') mindestens an jener Seite abgestützt wird, die der zu bearbeitenden Seite gegenüberliegt.

9. Bearbeitungsverfahren nach Anspruch 1, **dadurch gekennzeichnet, dass** das Sägeblatt (1) während der Bearbeitung beidseitig klemmend abgestützt wird.

10. Sägeblattschleifmaschine zur Durchführung des Verfahrens nach Anspruch 1, **dadurch gekennzeichnet, dass** sie eine Schleifscheibe zum Schleifen der Hartmetalleinsätze und eine Schleifscheibe zur beidseitigen Anfasung des Zahngrunds zwischen zwei benachbarten Hartmetalleinsätze aufweist.
